# EUROPEAN PATENT APPLICATION

(11) **EP 4 495 208 A1**
(43) Date of publication of application: **22.01.2025**
(21) Application number: 23770768.2
(22) Date of filing: 14.03.2023
(51) Int. Cl.: C10G 1/10, B01J 29/00, B01J 37/02, C08J 11/16, C08J 11/18

(54) **METHOD AND DEVICE FOR CONVERTING WASTE PLASTIC INTO THERMALLY CRACKED OIL, AND FCC CATALYST**

(30) Priority: 14.03.2022 JP 2022060803; 18.10.2022 JP 2022177690
(71) Applicant: Shinko. Co., Ltd., Azumino-shi, Nagano 399-8204 (JP)
(72) Inventor: TSURUMI, Shigeki, deceased (JP)
(74) Representative: Samson & Partner Patentanwälte mbB
(86) International application number: PCT/JP2023/009792
(87) International publication number: WO 2023/176813

(57) **Abstract**

The waste plastics thermal decomposition oilification method comprises: a step of heating waste plastics and a polymerization inhibitor, vaporizing the polymerization inhibitor, and thermally decomposing the waste plastics to produce a decomposed gas such that the polymerization inhibitor is caused to react with the decomposed gas in a gas phase; and a step of cooling the decomposed gas to produce a decomposed oil. As a result, the decomposed oil is not transformed to heavier components when the decomposed oil is produced. Therefore, the transformation of the decomposed oil to heavier components can be prevented even if waste plastics are thermally decomposed without separating them into an aliphatic type and an aromatic styrene type.

## Description

### Technical Field

The present invention relates to a waste plastic thermal decomposition oilification method and a waste plastic thermal decomposition oilification apparatus for thermally decomposing waste plastics and regenerating as a decomposed oil, and a fluid catalytic cracking (FCC) catalyst.

### Background Art

The inventor of the present application provides a waste plastic thermal decomposition oilification method disclosed in Patent Literature 1. In this method, waste plastics mixed with resins of different compositions, such as polypropylene (PP), polyethylene (PE), polystyrol (PS), are crushed to produce crushed raw materials. The crushed raw materials are put into a decomposition and evaporation reservoir together with a catalyst to thermally decompose the crushed raw materials while reacting with the catalyst. The decomposed gas evaporated in the decomposition and evaporation reservoir is cooled to produce a primary decomposed oil. The primary decomposed oil is distilled to produce a secondary decomposed oil. Moreover, the secondary decomposed oil is heated at a constant temperature to adjust the flash point. In this way, waste plastics are regenerated as petroleum products such as kerosene.

However, the primary decomposed oil is produced in a sticky, that is, highly viscous, muddy state and is transformed to so-called heavy compounds. As a result, there were problems that caused blockages in the piping path and apparatuses in the subsequent process of distillation, a flash point adjustment process by constant temperature heating, and on lines until the last storage. In addition, there were problems such as clogging of the nozzle of the burner causing poor combustion when using stored fuel.

It is conventionally known that characteristics of polypropylene (PP), polyethylene (PE), and polystyrol (PS) when they are thermally decomposed, respectively, are as shown in the following Table 1.

**[Table 1]**

| | polyethylene (PE) | polypropylene (PP) | polystyrol (PS) |
|---|---|---|---|
| thermal composition pattern | random decomposing type | random decomposing type | depolymerizing type |
| thermal composition characteristic temperature | 396°C to 441°C | 378°C to 425°C | 358°C to 410°C |
| components produced by thermal composition | alkene (olefin), alkane (paraffinic hydrocarbon) | alkene (olefin), alkane (paraffinic hydrocarbon) | styrene monomer, dimer and trimer of styrene, polycyclic aromatics, alkylbenzene |
| structure of product compound | Alkenes are aliphatic unsaturated compounds. Alkanes are aliphatic saturated compounds. Alkenes are transformed to saturated hydrocarbon (alkane) by receiving hydrogen on a catalyst. | Alkenes are aliphatic unsaturated compounds. Alkanes are aliphatic saturated compounds. Alkenes are transformed to saturated hydrocarbon (alkane) by receiving hydrogen on a catalyst. | Styrene has a structure in which one hydrogen atom is replaced by a vinyl group and is aromatic hydrocarbon having a side chain of unsaturated hydrocarbon. Alkylbenzen is aromatic hydrocarbon in which an alkyl group is bonded to the benzene ring. |

As shown in this Table 1, polyethylene (PE) is a linear aliphatic polymer in which the ethylene chain is polymerized, and polypropylene (PP) is a linear aliphatic polymer in which the propylene chain is polymerized. The thermal decomposition of polyethylene (PE) and polypropylene (PP) is random.

Meanwhile, polystyrol (PS) is an aromatic polymer including benzene rings, and has a molecular structure in which styrene including a vinyl group is polymerized. Accordingly, the thermal decomposition of polystyrol (PS) is mainly of depolymerizing type and highly reactive due to vinyl groups. As a result, we faced the problem of significantly large amount of transformation of the decomposed oil to heavier components when polystyrol (PS) is mixed with polyethylene (PE) and polypropylene (PP) for thermal decomposition.

Therefore, the inventor of the present application proposed a method disclosed in Patent Literature 2. In this method, waste plastics are divided into an aliphatic type and an aromatic styrene type to carry out thermal decomposition separately, and the polymerization inhibitor is mixed so that the decomposed oil components from highly reactive aromatic styrene type do not polymerize with the decomposed oil components from the aliphatic type, to form a decomposed oil with high fluidity to proceed to the next distillation step.

However, in the method disclosed in Patent Literature 2, it is necessary to separate waste plastics into the aliphatic type and the aromatic styrene type to carry out thermal decomposition separately. Therefore, there are problems related to the facility and the work load to deal with this process.

### Citation List

### Patent Literature

Patent Literature 1: JP 6631795 B
Patent Literature 2: JP 2021-188023 A
Patent Literature 3: WO 2007/086348 A1
Patent Literature 4: JP 2001-89768 A

### Summary of Invention

### Technical Problem

The present invention aims to effectively prevent the transformation of the decomposed oil to heavier components, without separating the waste plastics into an aliphatic type and an aromatic styrene type, in particular, even if the aliphatic type and the aromatic styrene type are mixed and thermally decomposed.

### Solution to Problem

The waste plastics thermal decomposition method according to an aspect of the present invention comprises: a step of heating waste plastics and a polymerization inhibitor, vaporizing the polymerization inhibitor, and thermally decomposing the waste plastics to produce a decomposed gas such that the polymerization inhibitor is reacted with the decomposed gas in a gas phase; and a step of cooling the decomposed gas to produce a decomposed oil.

The waste plastics thermal decomposition apparatus according to an aspect of the present invention comprises: a decomposition and evaporation reservoir configured to heat waste plastics and a polymerization inhibitor, vaporize the polymerization inhibitor, and thermally decompose the waste plastics to produce a decomposed gas such that the polymerization inhibitor is caused to react with the decomposed gas in a gas phase; and a condenser configured to be connected to the decomposition and evaporation reservoir and cool the decomposed gas supplied from the decomposition and evaporation reservoir to produce a decomposed oil.

The FCC catalyst according to an aspect of the present invention comprises a polymerization inhibitor.

### Advantageous Effects of Invention

In accordance with the present invention, in the waste plastics thermal decomposition processing, the polymerization inhibitor is vaporized, and the polymerization inhibitor is caused to react with the decomposed gas of waste plastics in the gas phase. As a result, the decomposed oil is not transformed to heavier components when the decomposed gas is cooled to produce the decomposed oil. Accordingly, according to the present invention, the transformation of the decomposed oil to heavier components can be effectively prevented even if the waste plastics are thermally decomposed without separating them into the aliphatic type and the aromatic styrene type.

### Brief Description of Drawings

FIG. 1 shows a flow sheet illustrating the flow of processing of Embodiment 1 of the present invention.
FIG. 2A shows a graph showing the results of analysis of the primary decomposed oil in the case where hydroquinone is added.
FIG. 2B shows a graph illustrating the results of analysis of the primary decomposed oil in the case where hydroquinone is not added.
FIG. 3 shows a molecular structure of hydroquinone and benzoquinone.
FIG. 4 shows a molecular structure of methyl hydroquinone.
FIG. 5 shows a flow sheet illustrating the flow of processing of Embodiment 2 of the present invention.
FIG. 6 shows a schematic diagram illustrating a configuration of the FCC catalyst used in Embodiment 2.

### Description of Embodiments

### [Principle]

In accordance with an embodiment of the present invention, a polymerization inhibitor is vaporized to react with the decomposed gas of waste plastics in the gas phase, in waste plastics thermal decomposition processing. The reaction will be described using hydroquinone (molecular formula: C₆H₆O₂) as a representative example of polymerization inhibitor.

It is assumed that waste plastics to be treated are made of a mixture of polypropylene (PP), polyethylene (PE) and polystyrol (PS). The temperature at which these substances thermally decompose is usually around 380°C to 420°C as shown in Table 1. Meanwhile, the boiling point of hydroquinone is about 285°C, which is below the above temperature. Accordingly, the vaporization of hydroquinone happens earlier than the thermal decomposition. However, hydroquinone is not likely to be lost due to its sublimation characteristics.

Meanwhile, the decomposed components of the decomposed gas of waste plastics become randomly distributed upon dissociation. Moreover, in the case of PS-derived components, PP and PE-derived components are easily repolymerized randomly by the reaction of PS-derived components (mainly styrene monomers with highly reactive vinyl groups) although not very much. This is a major cause of transformation to heavier components.

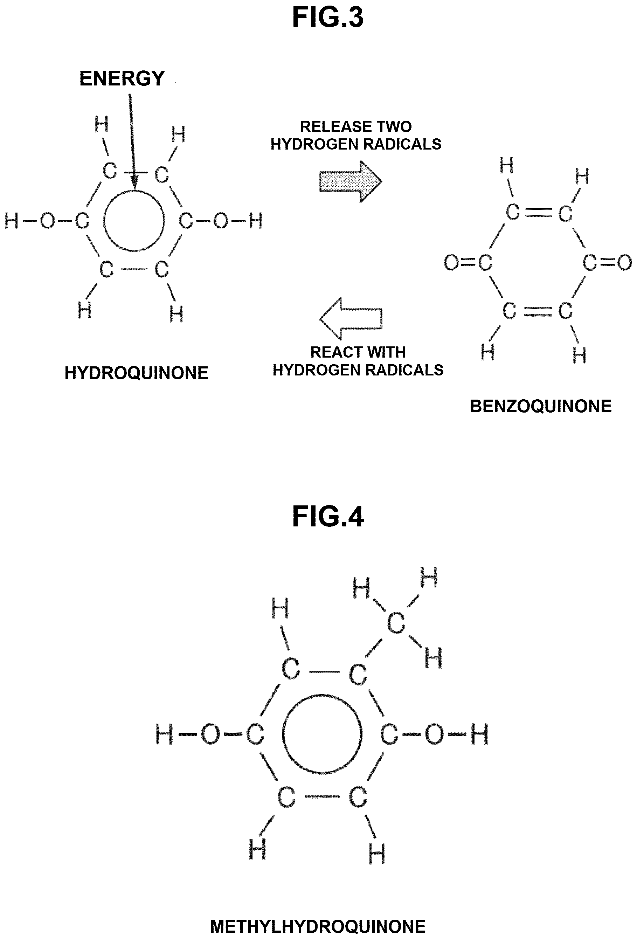

The molecular structure of hydroquinone is shown in FIG. 3. Hydroquinone, when given energy, releases two hydrogen radicals. This quenches (suppresses) random recombination and polymerization in the radical reaction of thermal decomposition through a chain transfer reaction that draws out active hydrogen. The quenching (suppressing) effect is high because the high temperature energy from the decomposed gas promotes the release of two hydrogen radicals.

Meanwhile, if we focus on the reaction of hydroquinone to PS-derived components, the chain draw-out effect of active hydrogen by the hydrogen radicals from hydroquinone prevents the presence of a large amount of styrene monomer radicals, which are PS-derived components. Accordingly, radicals of PP and PE-derived components cannot be present in large quantities. As a result, it is possible to reduce excessive formation of light and heavy matters and improve the yield of decomposed oil of moderate weight.

Meanwhile, as shown in FIG. 3, hydroquinone has a strong reducing power to return to the original hydroquinone by reacting with hydrogen radicals after releasing two hydrogen radicals and changing to benzoquinone (molecular formula: C₆H₄O₂). Therefore, hydroquinone also has a characteristic to be easily oxidized to change to p-benzoquinone. Such p-benzoquinone also has a polymerization inhibiting effect. As a result, it is possible to make the quenching (suppressing) effect last for a long time and decompose while suppressing side reactions due to reduction.

Since the above is carried out at the stage of decomposed gas before becoming a decomposed oil, not only does the decomposed oil transform to heavier components, but unnecessary components are also eliminated after changing to the decomposed oil. In addition, random scission is also suppressed, which narrows the distribution range of the carbon number of the components.

As disclosed in Patent Literature 2 and Patent Literature 4, the purpose of using a polymerization inhibitor in this technical field has mainly been to prevent blockage in a piping path or in an apparatus. For this reason, the polymerization inhibitor has only been added after the decomposed oil is formed (added in the liquid phase). Accordingly, the hydrogen radical reaction, which is a characteristic of polymerization inhibitors, could not be fully utilized.

Meanwhile, in the waste plastics thermal decomposition processing in this embodiment, the polymerization inhibitor is vaporized, and the polymerization inhibitor is caused to react with the decomposed gas of waste plastics in the gas phase. As a result, the hydrogen radical reaction, which is a characteristic of polymerization inhibitors, can be fully utilized to eliminate the mixing of unnecessary components.

Furthermore, in this embodiment, the polymerization inhibitor and the FCC catalyst are caused to coexist and heated to vaporize the polymerization inhibitor, and waste plastics are contacted with the FCC catalyst for thermal decomposition.

FCC catalysts are originally solid acid catalysts for decomposing heavy oil to transform into lighter oil. The reaction of the FCC catalyst with waste plastics, generating carbenium ions and decomposing the waste plastics is as disclosed in Patent Literature 3. However, polycyclic aromatics, which are contained in heavy components, are highly stable, and polycyclic aromatics in the FCC process is generally considered to be unlikely to decompose.

Now, focusing on the hydrogen transfer reaction in the FCC process, it is speculated that decomposition of polycyclic aromatics will also be possible if the hydrogen transfer reaction is promoted. Therefore, it is presumed that when a polymerization inhibitor coexists in the waste plastics contact thermal decomposition processing caused by the FCC catalyst, the hydrogen radical from the polymerization inhibitor promotes the hydrogen transfer reaction and promotes transformation of heavy components to lighter components by the FCC catalyst.

A polymerization inhibitor may be attached to the FCC catalyst directly. In this case, the polymerization inhibitor coexists with each grain of the FCC catalyst. Since the above hydrogen transfer reaction promotion effect by the polymerization inhibitor is effected on each grain of the FCC catalyst, the effect of the heavy component to lighter compounds by the FCC catalyst can be enhanced. In addition, the ratio of the polymerization inhibitor to the FCC catalyst can be adjusted in advance so that the mutual effect is optimal. Furthermore, there is no need for an operation work to add a polymerization inhibitor separately from the FCC catalyst.

### [Embodiment 1]

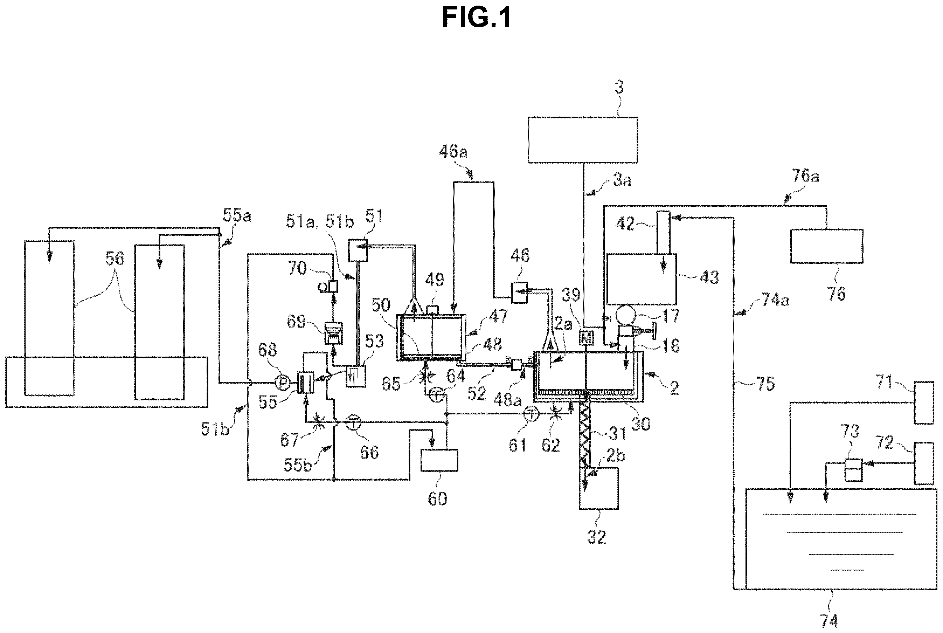

Embodiment 1 of waste plastics thermal decomposition oilification method and apparatus according to the present invention will be described with reference to FIG. 1. Among the raw materials of waste plastics mixed with PP, PE, and PS, those in the hard form are crushed by a first crusher 71 and sent to a raw material reservoir 74. Among the raw materials of waste plastics, those in soft form or film form are crushed by a second crusher 72, and furthermore, heated to a low temperature by, for example, warm air at 150°C, by a volume reducer 73 such that they are not thermally decomposed, and then sent to the raw material reservoir 74. The raw material reservoir 74 stores and naturally cools the crushed raw material 74a thus sent.

The crushed raw material 74a is air-conveyed through piping 75 from the raw material reservoir 74, collected by a cyclone 42, and temporarily stored in the raw material input hopper 43. The crushed raw material 74a is sent out from a raw material input hopper 43 at a predetermined flow rate by a rotary valve 17, mixed with the catalyst from a catalyst tank 76 in a water-cooled heat blocker 18, and input into the decomposition and evaporation reservoir 2. Here, an FCC waste catalyst 76a, which reuses the used FCC catalyst, is used as the catalyst. The input amount of the FCC waste catalyst 76a is about 20% to 30% by weight with respect to the crushed raw material 74a.

The decomposition and evaporation reservoir 2 is in a drum shape. The peripheral wall and bottom wall of the decomposition and evaporation reservoir 2 are all double-walled in order to be heated indirectly by the heating medium, and therefore the heating medium is circulated in the inner cavity of the peripheral wall and the bottom wall. The heating medium is heated by the heating medium heater 60 and sent to the decomposition and evaporation reservoir 2 through piping. A flow rate adjusting valve 62 is installed on the piping.

It should be noted that instead of circulating the heating medium in the inner cavity, the heating medium may be confined in the inner cavity and a warm air passage may be formed on the outer periphery of the inner cavity to circulate warm air in the warm air passage and to indirectly heat the heating medium. In this way, uneven heating of the decomposition and evaporation reservoir 2 is reduced. Alternatively, an electric heater may be wrapped around the outer periphery of the decomposition and evaporation reservoir 2 for heating.

A stirrer 30 that is rotated by a motor (M) 39 is provided in the decomposition and evaporation reservoir 2. The crushing raw material 74a and the FCC waste catalyst 76a are indirectly heated by the heat of the heating medium while being stirred by the stirrer 30 and transferred to converge on the center of the bottom wall. At this time, the temperature of the heating medium from the heating medium heater 60 is detected by the temperature sensor 61, and the temperature is adjusted by controlling the flow rate of the heating medium by a flow rate adjusting valve 62 according to said temperature. The temperature in the decomposition and evaporation reservoir 2 is maintained within the range of 350°C to 450°C, preferably 380°C to 400°C. Within this temperature range, the FCC waste catalyst 76a causes thermal decomposition by reacting with the crushed raw material 74a while contacting it. The residue 2b converged on the center of the bottom wall of the decomposition and evaporation reservoir 2 is discharged by a residue discharge screw 31 and collected in a residue collection tank 32.

The FCC waste catalyst 76a is of low cost and beneficial in terms of resource reuse. Meanwhile, the FCC waste catalyst 76a is less reactive to plastics due to its reduced acid strength compared to virgin FCC catalysts. As a result, thermal decomposition occurs in a wide range of carbon numbers, and the range of carbon numbers of the decomposed gas 2a produced by the thermal decomposition in primary processing tends to be generally wide, and unnecessary components tend to remain. However, FCC waste catalysts 76a are more suitable for thermal decomposition and regeneration processing of waste plastics from the viewpoint of acid strength. If the acid strength of a virgin FCC catalyst is about that of the FCC waste catalyst 76a, such a virgin FCC catalyst may be used.

In Embodiment 1, a polymerization inhibitor adder 3 is provided for accommodating hydroquinone 3a which serves as a polymerization inhibitor. Hydroquinone 3a is input into the decomposition and evaporation reservoir 2 from the polymerization inhibitor adder 3 via the water-cooled heat blocker 18 while adjusting the amount. The input amount of hydroquinone 3a is about 1% by weight with respect to the crushed raw material 74a.

The temperature in the decomposition and evaporation reservoir 2 is maintained at 380°C to 400°C as described above. The boiling point of hydroquinone 3a is about 285°C. Meanwhile, as shown in Table 1, the thermal decomposition characteristic temperatures of PS, PP, and PE are 358°C to 410°C, 378°C to 425°C, and 396°C to 441°C, respectively. Therefore, the vaporization of hydroquinone 3a precedes the thermal decomposition, and the contact thermal decomposition of PS, PP and PE by the FCC waste catalyst 76a occurs in the order of PS, PP, and PE when coexisted with hydroquinone 3a. Hydroquinone 3a is involved in the decomposition of PS, PP, and PE in the contact thermal decomposition processing by the FCC waste catalyst 76a, and the vaporized hydroquinone 3a reacts in the gas phase with the decomposed gas 2a of PS, PP, and PE.

The decomposed gas 2a reacted with hydroquinone 3a in the decomposition and evaporation reservoir 2 is cooled by a first condenser 46 connected to the ceiling wall of the decomposition and evaporation reservoir 2 via piping to form a primary decomposed oil 46a. The following qualitative analysis was carried out for this decomposed oil 46a by conducting a comparison experiment between a case where hydroquinone 3a is added to the decomposed gas 2a and a case where hydroquinone 3a is not added.

(A) The case where hydroquinone 3a is added:
Hydroquinone 3a of about 1% by weight was added to the crushed raw material 74a to form a decomposed oil 46a. A sample of the decomposed oil 46a was added to 1 ml of N-hexane and injected into a gas chromatography mass spectrometer by using an autosampler for analysis. As a result of the analysis, toluene, ethylbenzene, stilbenzene, methylethylbenzene, benzaldehyde, methylpyrazine, acetophenone, and a compound presumed to have two benzene rings and an alkyl group were detected. A large amount of low boiling point compounds was detected compared to the decomposed oil of (B) the case where hydroquinone 3a is not added.

(B) The case where hydroquinone 3a is not added (no hydroquinone addition):
A sample of decomposed oil produced without the addition of hydroquinone 3a was added to 1 ml of N-hexane to be injected into a gas chromatography mass spectrometer by using an autosampler for analysis. As a result of the analysis, toluene, ethylbenzene, styrene, methylethylbenzene, benzaldehyde, methylpyrazine, and acetophenone, as well as naphthalene, phenylnaphthalene compounds, and a compound presumed as anthracene, and many unknown compounds were detected. Here, naphthalin, phenylnaphthalene compounds, and anthracene are all polycyclic aromatic hydrocarbons, which were not detected in (A) the case where hydroquinone 3a is added. In addition, various kinds of high boiling point compounds were detected as compared to the decomposed oil 46a in (A) the case where hydroquinone 3a is added.

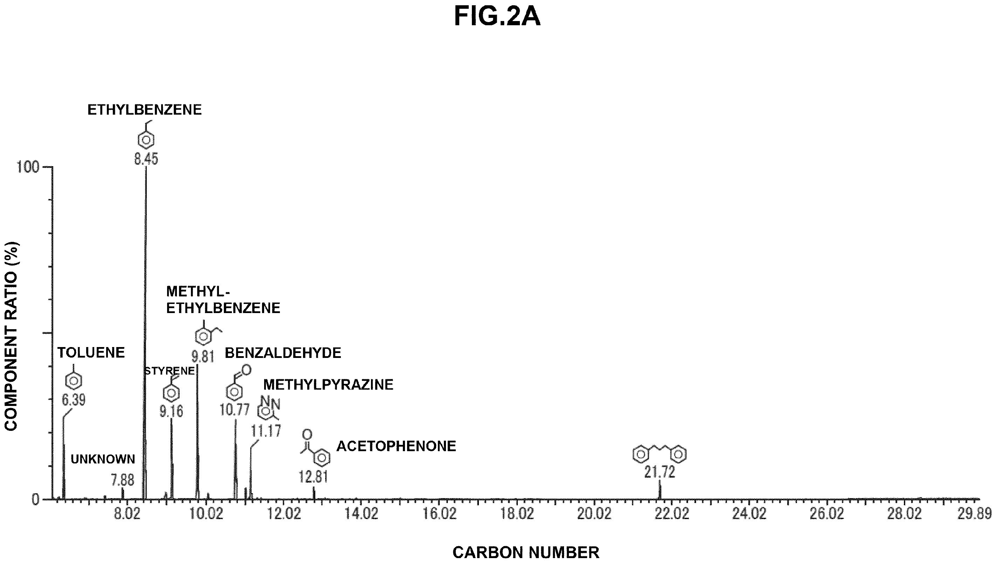

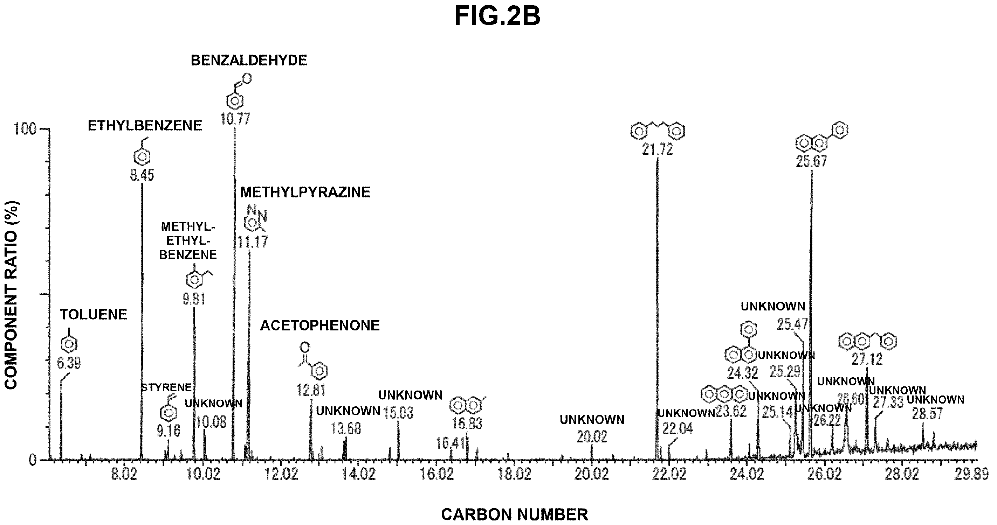

FIG. 2A shows the analysis results for the case where hydroquinone is added, and FIG. 2B shows the analysis results for the case where hydroquinone is not added. In FIGS. 2A and 2B, the axis of abscissa indicates the carbon number, and the axis of ordinate indicates the component ratio (%) of a certain carbon number. When comparing FIGS. 2A and 2B, toluene, ethylbenzene, styrene, methylethylbenzene, benzaldehyde, methylpyrazine, and acetophenone, as well as naphthalin, phenylnaphthalene compound, and anthracene are included in the (B) case where hydroquinone is not added. All of the above are polycyclic aromatic hydrocarbons, and there are many kinds of unknown components with the carbon number of 20 or more, considered to be unnecessary for the product oil. Meanwhile, in (A) the case where hydroquinone is added, there are no such components, and the carbon number is almost limited to 14 or less, and there are only a small amount of components with the carbon number of 20 or more. The absence of mixed presence of many unknown components also suggests that there is no mixing of such components that are originated from the FCC waste catalyst 76a.

Table 2 shows in area percentages the carbon number distribution of the gas chromatographic analysis results in (A) the case where hydroquinone is added.

**[Table 2]**

| carbon number distribution | area % |
|---|---|
| C7 or less | 9.6 |
| C8 | 25.9 |
| C9 | 42.9 |
| C10 | 12.3 |
| C11 | 4.4 |
| C12 | 2.2 |
| C13 | 1.2 |
| C14 | 0.6 |
| C15 | 0.4 |
| C16 | 0.3 |
| C17 | 0.2 |
| C18 | 0.1 |
| C19 | 0.0 |
| C20 | 0.0 |
| C21 | 0.0 |
| C22 | 0.0 |
| C23 | 0.0 |
| C24 | 0.0 |
| C25 | 0.0 |
| C26 or more | 0.0 |
| Total | 100.0 |

From the analysis results, it is presumed that the following occurs when hydroquinone 3a coexists in the contact thermal decomposition processing of PS, PP, and PE by the FCC waste catalyst 76a, and the vaporized hydroquinone 3a is caused to react with the decomposed gas 2a in the gas phase.
(1) The thermal decomposition characteristic temperature for thermally decomposing waste plastics of PP, PE, and PS is usually about 380°C to 420°C, whereas the boiling point of hydroquinone 3a is about 285°C. Therefore, the vaporization of hydroquinone 3a precedes the thermal decomposition so that hydroquinone 3a is involved in the contact thermal decomposition of PS, PP, and PE by the FCC waste catalyst 76a. The vaporized hydroquinone 3a is immediately mixed with the decomposed gas 2a in the gas phase for radical reaction. Hydroquinone 3a is not likely to be lost due to its sublimation so that the radical reaction persists.
(2) The thermally decomposed component does not contain polycyclic aromatic hydrocarbons such as naphthalin, phenylnaphthalene compound, and anthracene. For this reason, it is presumed that hydroquinone 3a promoted the hydrogen transfer reaction and contributed to the decomposition of polycyclic aromatic hydrocarbons during the contact thermal decomposition processing of PS, PP, and PE by the FCC waste catalyst 76a.
(3) The decomposed components of decomposed gas 2a dissociate and become randomly distributed. Moreover, as mentioned above, components derived from PP and PE are easily repolymerized randomly by components derived from PS. This is a major cause of the transformation to heavier components. However, hydroquinone 3a has a molecular structure as shown in FIG. 3. Hydroquinone 3a releases two hydrogen radicals when energized. This quenches (suppresses) random recombination and polymerization in the radical reaction of thermal decomposition. As for the vaporized hydroquinone 3a, the quench (suppression) effect is high because the high temperature energy from the decomposed gas 2a promotes the release of two hydrogen radicals.
(4) Focusing on the reaction of hydroquinone 3a with PS-derived components, the chain draw-out of active hydrogen from hydroquinone 3a by hydrogen radicals prevents the presence of a large amount of styrene monomer radicals, which are PS-derived components. As a result, radicals of PP and PE-derived components cannot be present in large quantities. For this reason, it is speculated that the expansion of the distribution range of the carbon number of the decomposed components has also narrowed.
(5) Meanwhile, as shown in FIG. 3, hydroquinone 3a has a strong reducing power to return to the original hydroquinone 3a when it reacts with hydrogen radicals after releasing two hydrogen radicals and changing to benzoquinone. Therefore, hydroquinone 3a is easily oxidized to p-benzoquinone. However, such a situation is not likely to occur due to the lack of oxygen in the thermal decomposition reaction. As a result, the quenching (suppressing) effect lasts for a long time and it is possible to be decomposed while suppressing side reactions due to reduction.
(6) As a result of the above, decomposed components and unnecessary components, such as polycyclic aromatic hydrocarbons, causing transformation to heavier components are eliminated, and random scission is also suppressed, narrowing the distribution range of the carbon number.

We will return to FIG. 1. The primary decomposed oil 46a of the above-mentioned nature is flowed into the distillation reservoir 48 of the distillation stabilizer 47 for distillation and purification. The distillation reservoir 48 employs similar indirect heating method to the decomposition and evaporation reservoir 2. The bottom wall and the peripheral wall of the distillation reservoir 48 have a double structure forming a cavity, in which the heating medium from the heating medium heater 60 is circulated to indirectly heat the inside of the distillation reservoir 48. The heating temperature herein is caused to be within a predetermined temperature range lower than the heating temperature in the decomposition and evaporation reservoir 2 by detecting the heating medium with the temperature sensor 64 and adjusting the flow rate of the heating medium with the flow rate adjusting valve 65. Furthermore, in order to distill the primary decomposed oil 46a in the distillation reservoir 48 while stirring it, the distillation stabilizer 47 is equipped with a stirrer 50, which is rotated by a motor (M) 49 outside the reservoir.

The gas fraction evaporated in the distillation reservoir 48 is cooled by a second condenser 51 installed above the distillation reservoir 48 and connected via the piping. The condenser 51 functions as a secondary decomposed oil forming apparatus, and the cooling here produces a secondary decomposed oil 51a having carbon numbers of about C6 to C15. The low carbon number decomposed gas (off-gas) 51b with the carbon numbers of C1 to C5, which are lower than the above carbon numbers, remains the same here as well.

The distillation reservoir 48 and the decomposition and evaporation reservoir 2 are connected by return piping 52 interposed with an electromagnetic valve. When a certain amount of compounds with carbon number C16 or more accumulates in the distillation reservoir 48, the compounds are returned to the decomposition and evaporation reservoir 2 via the return piping 52 as the returned decomposed oil 48a, and undergo thermal decomposition processing again in the decomposition and evaporation reservoir 2.

The secondary decomposed oil 51a produced in the second condenser 51 flows into the separation tank 53 installed below the second condenser 51 and connected to the second condenser 51 via piping, and then separates impurities or the like by precipitation and enters into a constant temperature heating reservoir 55 of a flash point adjusting apparatus.

The constant temperature heating reservoir 55 is heated with the heating medium similarly to the decomposition and evaporation reservoir 2 and the distillation reservoir 48. The heating temperature of the secondary decomposed oil 51a is approximately a constant temperature that is lower than the heating temperature in the distillation reservoir 48. Therefore, the temperature of the heating medium from the heating medium heater 60 is detected by the temperature sensor 66, and the flow rate of the heating medium is controlled by the flow control valve 67 according to said temperature. For example, when the desired flash point is 30°C, and if the temperature 126°C, which is the boiling point of the carbon number C8, is used as a reference, the compounds within the range of the carbon number C9 to C15 remains in the constant temperature heating reservoir 55, and the decomposed oil 55b with the carbon number C6 to C8, exceeding the above range of carbon numbers, is separated. Since such decomposed oil 55b with carbon number C6 to C8 is a high flash point decomposed oil with a relatively high flash point, it can be used as a liquid fuel for the heating medium heater 60.

Meanwhile, the low carbon number decomposed gas (off-gas) 51b with carbon number C1 to C5, that has passed through the separation tank 53 without change, is highly flammable. Therefore, the low carbon number decomposed gas 51b can be used as gaseous fuel for the heating medium heater 60 if it is sent to the heating medium heater 60 with a vacuum pump 70 while being cleaned by a gas cleaning apparatus 69.

The product oil 55a with carbon number C9 to C15 remaining in the constant temperature heating reservoir 55 is sent into the product storage tank 56 in a timely manner by a pump (P) 68 and stored in the storage tank 56. The regenerated product oil 55a is kerosene, which is a highly marketable petroleum product with the carbon number in the range of C9 to C15.

Similarly to such temperature adjustment, it is apparent that other petroleum products such as light oil, heavy oil, etc., with different carbon numbers can be produced by adjusting the heating temperature in the distillation reservoir 48 and the heating temperature in the constant temperature heating reservoir 55.

Since the primary decomposed oil 46a has characteristics described above and is not transformed into heavy compounds, distillation and flash point adjustment purification are carried out in the secondary mixing treatment system while maintaining the characteristics of high fluidity, and there will be no blockage in the piping paths, apparatuses, or reservoirs between the distillation and the flash point adjustment.

In Embodiment 1, an FCC catalyst is used to promote the reaction, but it is possible to convert waste plastics into a thermal decomposed oil without using the FCC catalyst. Therefore, in Embodiment 1, the FCC catalyst is not essential.

### [Embodiment 2]

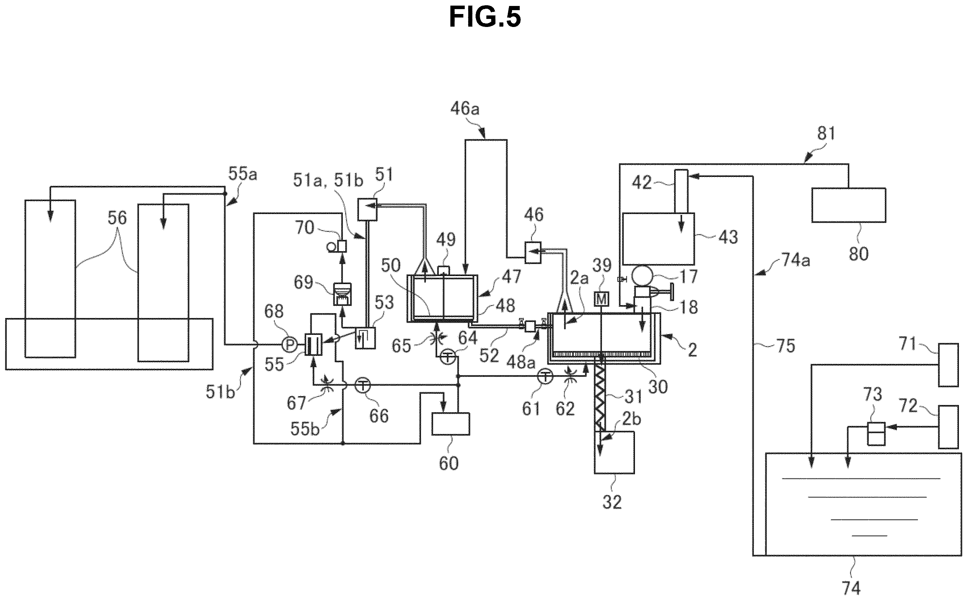

Embodiment 2 of the present invention will be described now. In Embodiment 1, a polymerization inhibitor (hydroquinone 3a) was added to the decomposition and evaporation reservoir 2 separately from the catalyst (FCC waste catalyst 76a). Meanwhile, in Embodiment 2, an FCC catalyst (FCC waste catalyst 81 in Embodiment 2 also) to which a polymerization inhibitor is attached is used, and such an FCC catalyst is put into the decomposition and evaporation reservoir 2. Accordingly, in Embodiment 2, instead of the catalyst tank 76 that houses the catalyst and the polymerization inhibitor adder 3 that houses the polymerization inhibitor, a catalyst tank 80 that houses the FCC waste catalyst 81 to which an polymerization inhibitor is attached is provided, as shown in FIG. 5. Other configurations are the same as in Embodiment 1.

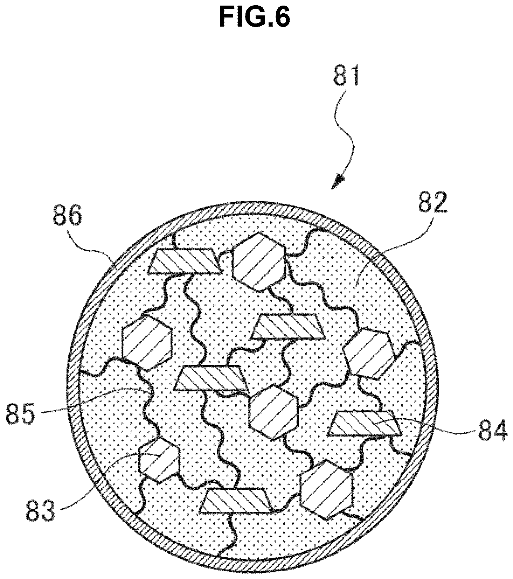

FIG. 6 shows a schematic view of the FCC waste catalyst 81 to which the polymerization inhibitor is attached. The FCC waste catalyst 81 has the same structure as a general FCC catalyst, in which zeolite 83, which is the main component of the FCC catalyst, is bonded with a mineral 84, such as kaolin, by using a binder 85 in the base body 82 constituted by silica or the like. Thus, the base body 82 retains zeolite 83 and other components. The shape of the base body 82 may have a spherical shape as shown in FIG. 6, or may have a pellet shape, etc. In the FCC waste catalyst 81 used in Embodiment 2, the surface of the base body 82 is coated with hydroquinone 86, which is a polymerization inhibitor. Specifically, the surface of the base body 82 is coated with a coating agent mixed with hydroquinone 86. Examples of the coating agent include a glass-based coating agent containing silica as the main component. The adhesion ratio of hydroquinone 86 to the FCC waste catalyst 81 is adjusted so that the interaction between the two is optimal.

When such an FCC waste catalyst 81 is put into the decomposition and evaporation reservoir 2, the process proceeds as described in Embodiment 1. However, since the FCC waste catalyst 81 includes hydroquinone 86 attached thereon as a polymerization inhibitor, hydroquinone 86 coexists with each grain of the FCC waste catalyst 81. As a result, the hydrogen transfer reaction promotion effect described above caused by hydroquinone 86 is effected on each grain of the FCC waste catalyst 81, and therefore the effect of transformation to lighter compounds by the FCC waste catalyst 81 can be improved. In addition, the ratio of hydroquinone 86 to the FCC waste catalyst 81 can be adjusted in advance by the attached amount of hydroquinone 86 in order to optimize the mutual effect. Furthermore, there is no need to add hydroquinone 86 separately from the FCC waste catalyst 81 as in Embodiment 1.

In Embodiments 1 and 2 described above, hydroquinone 86 is used as the polymerization inhibitor, but other polymerization inhibitors having similar characteristics as hydroquinone 86 can be used, such as a quinone-based polymerization inhibitor such as methyl hydroquinone (molecular formula: CH₃C₆H₃(OH)2) with the molecular structure shown in FIG. 4, and a phenolic polymerization inhibitor such as 4-methoxyphenol (molecular formula: CH₃OC₆H₄OH).

In addition, Embodiments 1 and 2 were explained using the example of waste plastics mixed with PP, PE, and PS, but any waste plastic can be used as long as it can undergo thermal decomposition and regeneration processing. For example, the present invention can be applied to waste plastics constituted by vinyl chloride (PVC) and polyethylene terephthalate (PET).

Thus, various combinations can be considered for materials of waste plastics and types of polymerization inhibitors. In any combination, in order to fully utilize the hydrogen radical reaction (hydrogen transfer reaction), which is a characteristic of the polymerization inhibitor, it is preferable that the boiling point of the polymerization inhibitor is lower than the thermal decomposition characteristic temperature of waste plastics.

### [Aspects of the present invention]

A first aspect of the present invention concerns a waste plastics thermal decomposition oilification method comprising: a step of heating waste plastics (74a) and a polymerization inhibitor, vaporizing the polymerization inhibitor, and thermally decomposing the waste plastics (74a) to produce a decomposed gas (2a) such that the polymerization inhibitor is caused to react with the decomposed gas (2a) in a gas phase; and a step of cooling the decomposed gas (2a) to produce a decomposed oil (46a).

The step of heating may comprise a step of heating an FCC (fluid catalytic cracking) catalyst together with the waste plastics (74a) and the polymerization inhibitor to cause the waste plastics (74a) to contact with the FCC catalyst for thermal decomposition.

In this case, the thermal decomposition oilification method may further comprise: a step of supplying the waste plastics (74a) to a decomposition and evaporation reservoir (2); a step of supplying the FCC catalyst (76a) from a catalyst tank (76) containing the FCC catalyst (76a) to the decomposition and evaporation reservoir (2); and a step of supplying the polymerization inhibitor (3a) from the polymerization inhibitor adder (3) containing the polymerization inhibitor (3a) to the decomposition and evaporation reservoir (2), wherein the step of heating may comprise a step of heating the waste plastics (74a), the FCC catalyst (76a), and the polymerization inhibitor (3a) in the decomposition and evaporation reservoir (2).

Alternatively, the thermal decomposition oilification method may further comprise: a step of supplying waste plastics (74a) to the decomposition and evaporation reservoir (2); and a step of supplying the FCC catalyst (81) to which the polymerization inhibitor (86) is attached from the catalyst tank (80) housing the FCC catalyst (81) to which the polymerization inhibitor (86) is attached to the decomposition and evaporation reservoir (2), wherein the step of heating may include a step of heating the waste plastics (74a) and the FCC catalyst (81) to which the polymerization inhibitor (86) is attached in the decomposition and evaporation reservoir (2). The FCC catalyst (81) may be coated with the polymerization inhibitor (86).

A second aspect of the present invention concerns a waste plastics thermal decomposition oilification apparatus comprising: a decomposition and evaporation reservoir (2) configured to heat waste plastics (74a) and a polymerization inhibitor, vaporize the polymerization inhibitor, and thermally decompose the waste plastics (74a) to produce a decomposed gas (2a) such that the polymerization inhibitor is caused to react with the decomposed gas (2a) in a gas phase; and a condenser (46) connected to the decomposition and evaporation reservoir (2), and configured to cool the decomposed gas (2a) supplied from the decomposition and evaporation reservoir (2) to produce a decomposed oil (46a).

The thermal decomposition oilification apparatus may further comprise a raw material reservoir (74) connected to the decomposition and evaporation reservoir (2), and configured to store the waste plastics (74a), and supply the waste plastics (74a) to the decomposition and evaporation reservoir (2); and a polymerization inhibitor adder (3) connected to the decomposition and evaporation reservoir (2), and configured to contain the polymerization inhibitor (3a), and supply the polymerization inhibitor (3a) to the decomposition and evaporation reservoir (2).

The decomposition and evaporation reservoir (2) may be configured to heat an FCC catalyst together with the waste plastics (74a) and the polymerization inhibitor to cause the waste plastics (74a) to contact with the FCC catalyst for thermal decomposition.

In this case, the thermal decomposition oilification apparatus may further comprise a catalyst tank (76) connected to the decomposition and evaporation reservoir (2), and configured to accommodate the FCC catalyst (76a), and supply the FCC catalyst (76a) to the decomposition and evaporation reservoir (2).

Alternatively, the thermal decomposition oilification apparatus may further comprise a catalyst tank (80) connected to the decomposition and evaporation reservoir (2), and configured to accommodate the FCC catalyst (81) to which the polymerization inhibitor (86) is attached, and supply the FCC catalyst (81) to which the polymerization inhibitor (86) is attached to the decomposition and evaporation reservoir (2). The FCC catalyst (81) may be coated with the polymerization inhibitor (86). In this case, it is not necessary to have the polymerization inhibitor adder (3) separately.

A third aspect of the present invention is an FCC catalyst (81) provided with a polymerization inhibitor (86).

The FCC catalyst (81) may further comprise a base body (82) that retains a main component (83) of the catalyst, wherein the surface of the base body (82) may be coated with a polymerization inhibitor (86). The surface of the base body (82) may be coated with a coating agent mixed with a polymerization inhibitor (86). For example, a glass-based coating agent including silica as the main component can be used as the coating agent.

In the first and second aspects of the invention, the waste plastics (74a) may include an aliphatic plastic and an aromatic styrenic plastic. The aliphatic plastic may be at least one of polypropylene and polyethylene. The aromatic styrenic plastic may be polystyrol.

In the first and second aspects of the invention, the polymerization inhibitor (3a, 86) may be a quinone-based polymerization inhibitor such as hydroquinone and methylhydroquinone. The polymerization inhibitor (3a, 86) may be a phenolic polymerization inhibitor such as 4-methoxyphenol. The polymerization inhibitor (3a, 86) may have a boiling point lower than the thermal decomposition characteristic temperature of the waste plastics (74a).

In the first and second aspects of the invention, the amount of the polymerization inhibitor may be 1% by weight with respect to the waste plastics (74a). The amount of the FCC catalyst may be 20% to 30% by weight with respect to the waste plastics (74a). The temperature in the decomposition and evaporation reservoir (2) may be 350°C to 450°C. The temperature in the decomposition and evaporation reservoir (2) may be 380°C to 400°C.

In the first to third aspects of the invention, the FCC catalyst (76a, 81) may be an FCC waste catalyst (76a, 81) that reuses a used FCC catalyst.

### [Industrial availability]

The FCC catalyst according to the present invention can be used not only for thermal decomposition processing of waste plastics, but also for oil refining technology for transforming heavy components to lighter compounds.

### Reference signs list

2: decomposition and evaporation reservoir,
3: polymerization inhibitor adder,
18: water-cooled heat blocker,
43: raw material input hopper,
46: condenser,
47: distillation stabilizer,
48: distillation reservoir,
51: condenser,
53: separation tank,
55: constant temperature heating reservoir,
56: product storage tank,
74: raw material reservoir,
76, 80: catalyst tank,
81: FCC waste catalyst,
82: base body,
83: zeolite,
84: mineral,
85: binder,
86: polymerization inhibitor

## Claims

1. A waste plastics thermal decomposition oilification method comprising:
a step of heating waste plastics and a polymerization inhibitor, vaporizing the polymerization inhibitor, and thermally decomposing the waste plastics to produce a decomposed gas such that the polymerization inhibitor is caused to react with the decomposed gas in a gas phase; and
a step of cooling the decomposed gas to produce a decomposed oil.

2. The waste plastics thermal decomposition oilification method according to claim 1, wherein
the step of heating comprises a step of heating an FCC (fluid catalytic cracking) catalyst together with the waste plastics and the polymerization inhibitor to cause the waste plastics to contact with the FCC catalyst for thermal decomposition.

3. The waste plastics thermal decomposition oilification method according to claim 2, further comprising:
a step of supplying the waste plastics to a decomposition and evaporation reservoir;
a step of supplying the FCC catalyst from a catalyst tank containing the FCC catalyst to the decomposition and evaporation reservoir; and
a step of supplying the polymerization inhibitor from the polymerization inhibitor adder containing the polymerization inhibitor to the decomposition and evaporation reservoir, wherein
the step of heating comprises a step of heating the waste plastics, the FCC catalyst, and the polymerization inhibitor in the decomposition and evaporation reservoir.

4. The waste plastics thermal decomposition oilification method according to claim 2, further comprising:
a step of supplying the waste plastics to a decomposition and evaporation reservoir;
a step of supplying to the decomposition and evaporation reservoir the FCC catalyst to which the polymerization inhibitor is attached from a catalyst tank housing the FCC catalyst to which the polymerization inhibitor is attached, wherein
the step of heating comprises a step of heating the waste plastics and the FCC catalyst to which the polymerization inhibitor is attached in the decomposition and evaporation reservoir.

5. The waste plastics thermal decomposition oilification method according to claim 2, wherein
the step of heating comprises a step of heating the FCC catalyst coated with the polymerization inhibitor.

6. A waste plastics thermal decomposition oilification apparatus comprising:
a decomposition and evaporation reservoir configured to heat waste plastics and a polymerization inhibitor, vaporize the polymerization inhibitor, and thermally decompose the waste plastics to produce a decomposed gas such that the polymerization inhibitor is caused to react with the decomposed gas in a gas phase; and
a condenser connected to the decomposition and evaporation reservoir, and configured to cool the decomposed gas supplied from the decomposition and evaporation reservoir to produce a decomposed oil.

7. The waste plastics thermal decomposition oilification apparatus according to claim 6, further comprising:
a raw material reservoir connected to the decomposition and evaporation reservoir, and configured to store the waste plastics, and supply the waste plastics to the decomposition and evaporation reservoir; and
a polymerization inhibitor adder connected to the decomposition and evaporation reservoir, and configured to contain the polymerization inhibitor, and supply the polymerization inhibitor to the decomposition and evaporation reservoir.

8. The waste plastics thermal decomposition oilification apparatus according to claim 6, wherein
the decomposition and evaporation reservoir is configured to heat an FCC (fluid catalytic cracking) catalyst together with the waste plastics and the polymerization inhibitor to cause the waste plastics to contact with the FCC catalyst for thermal decomposition.

9. The waste plastics thermal decomposition oilification apparatus according to claim 8, further comprising
a catalyst tank connected to the decomposition and evaporation reservoir, and configured to accommodate the FCC catalyst, and supply the FCC catalyst to the decomposition and evaporation reservoir.

10. The waste plastics thermal decomposition oilification apparatus according to claim 8, further comprising
a catalyst tank connected to the decomposition and evaporation reservoir, and configured to accommodate the FCC catalyst to which the polymerization inhibitor is attached, and supply the FCC catalyst to which the polymerization inhibitor is attached to the decomposition and evaporation reservoir.

11. The waste plastics thermal decomposition oilification apparatus according to claim 10, wherein
the FCC catalyst is coated with the polymerization inhibitor.

12. An FCC catalyst comprising a polymerization inhibitor.

13. The FCC catalyst according to claim 12, further comprising
a base body that retains a main component of the catalyst, wherein
a surface of the base body is coated with the polymerization inhibitor.

## Amended claims

### Amended claims under Art. 19.1 PCT

1. A fluid catalytic cracking catalyst comprising a polymerization inhibitor.

2. The fluid catalytic cracking catalyst according to claim 1, further comprising
a base body that retains a main component of the catalyst, wherein
a surface of the base body is coated with the polymerization inhibitor.

3. The fluid catalytic cracking catalyst according to claim 1 or 2, wherein
the polymerization inhibitor is a quinone-based polymerization inhibitor including hydroquinone.

4. A waste plastics thermal decomposition oilification method comprising:
a step of heating waste plastics and the fluid catalytic cracking catalyst according to any one of claims 1 to 3, vaporizing the polymerization inhibitor of the fluid catalytic cracking catalyst, and thermally decomposing the waste plastics by causing the waste plastics to contact with the fluid catalytic cracking catalyst to produce a decomposed gas such that the polymerization inhibitor is caused to react with the decomposed gas in a gas phase; and
a step of cooling the decomposed gas to produce a decomposed oil.

5. The waste plastics thermal decomposition oilification method according to claim 4, further comprising:
a step of supplying the waste plastics to a decomposition and evaporation reservoir;
a step of supplying the fluid catalytic cracking catalyst with the polymerization inhibitor to the decomposition and evaporation reservoir from a catalyst tank housing the fluid catalytic cracking catalyst with the polymerization inhibitor, wherein
the step of heating comprises a step of heating the waste plastics and the fluid catalytic cracking catalyst with the polymerization inhibitor.

6. A waste plastics thermal decomposition oilification apparatus comprising:
a decomposition and evaporation reservoir configured to heat waste plastics and the fluid catalytic cracking catalyst according to any one of claims 1 to 3, vaporize the polymerization inhibitor of the fluid catalytic cracking catalyst, and thermally decompose the waste plastics by causing the waste plastics to contact with the fluid catalytic cracking catalyst to produce a decomposed gas such that the polymerization inhibitor is caused to react with the decomposed gas in a gas phase; and
a condenser connected to the decomposition and evaporation reservoir, and configured to cool the decomposed gas supplied from the decomposition and evaporation reservoir to produce a decomposed oil.

7. The waste plastics thermal decomposition oilification apparatus according to claim 6, further comprising:
a raw material reservoir connected to the decomposition and evaporation reservoir, and configured to store the waste plastics, and supply the waste plastics to the decomposition and evaporation reservoir.

8. The waste plastics thermal decomposition oilification apparatus according to claim 6 or 7, further comprising
a catalyst tank connected to the decomposition and evaporation reservoir, and configured to accommodate the fluid catalytic cracking catalyst with the polymerization inhibitor, and supply the fluid catalytic cracking catalyst with the polymerization inhibitor to the decomposition and evaporation reservoir.
